(19) Europäisches Patentamt
European Patent Office
Office européen des brevets

(11) **EP 4 497 725 A1**

(12) **EUROPEAN PATENT APPLICATION**
published in accordance with Art. 153(4) EPC

(43) Date of publication:
**29.01.2025 Bulletin 2025/05**

(21) Application number: **23774634.2**

(22) Date of filing: **13.03.2023**

(51) International Patent Classification (IPC):
**B82B 1/00** (2006.01)   **B82Y 20/00** (2011.01)
**B82Y 30/00** (2011.01)

(52) Cooperative Patent Classification (CPC):
**B82B 1/00; B82Y 20/00; B82Y 30/00**

(86) International application number:
**PCT/JP2023/009554**

(87) International publication number:
**WO 2023/182037 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.03.2022 JP 2022046569**

(71) Applicant: **Sony Group Corporation
Tokyo 108-0075 (JP)**

(72) Inventor: **SAKAMOTO, Shigeru
Tokyo 108-0075 (JP)**

(74) Representative: **D Young & Co LLP
3 Noble Street
London EC2V 7BQ (GB)**

(54) **STRUCTURE**

(57)   A structure according to an embodiment of the present disclosure includes a stack of multiple nanoparticles that each include a core part and a surface modification part covalently bonded to the core part and satisfy a relationship of $0 < a/b \leq 2.73$ between a radius a of the core part and a length b of the surface modification part.

[ FIG. 1 ]

**Description**

Technical Field

The present disclosure relates to a structure using a nanoparticle, for example.

Background Art

For example, PTL 1 discloses a nanocomposite resin composition including a thermosetting resin or a thermoplastic resin, a silane coupling agent, and two types of inorganic fillers that differ from each other in particle diameter or length. One of the two types of the inorganic fillers is inorganic particles including one type or two or more types among $Al_2O_3$, MgO, $TiO_2$, and AlN, on a surface of which is formed a film of $SiO_2$ to improve adhesiveness with the resin and to improve its mechanical characteristics and thermal conductivity characteristics to achieve long-term reliability for serving as an insulating material.

Citation List

Patent Literature

PTL 1: International Publication No. WO2013/094679

Summary of the Invention

By the way, it has been desired that a glass material included in an optical component or a glass substrate, for example, have high light transmissivity.

It is desirable to provide a structure having high light transmissivity.

A structure according to an embodiment of the present disclosure includes a stack of multiple nanoparticles that each include a core part and a surface modification part covalently bonded to the core part and satisfy a relationship of $0 < a/b \leq 2.73$ between a radius a of the core part and a length b of the surface modification part.

The structure according to the embodiment of the present disclosure is formed using the multiple nanoparticles that each include the core part and the surface modification part covalently bonded to the core part and satisfy the relationship of $0 < a/b \leq 2.73$ between the radius a of the core part and the length b of the surface modification part. This makes it possible to obtain a non-porous body without a gap G between the multiple nanoparticles 10.

Brief Description of Drawings

[FIG. 1] FIG. 1 is a schematic diagram illustrating an example of an outline configuration of a structure according to an embodiment of the present disclosure.

[FIG. 2] FIG. 2 is a diagram illustrating an example of a structure of a nanoparticle illustrated in FIG. 1.

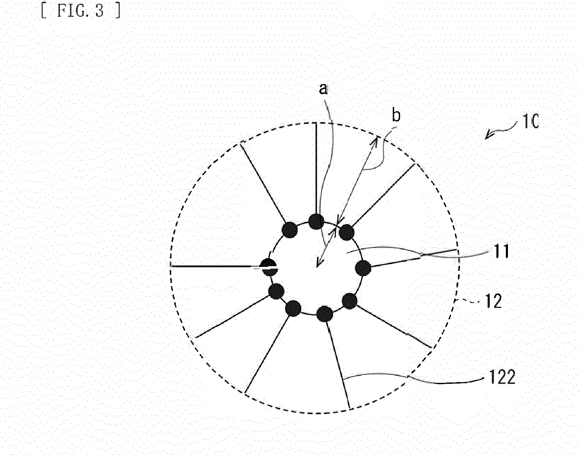

[FIG. 3] FIG. 3 is a diagram illustrating another example of the structure of the nanoparticle illustrated in FIG. 1.

[FIG. 4A] FIG. 4A is a diagram illustrating grounds for a relationship between a radius of a core part and a length of a surface modification part of the nanoparticle.

[FIG. 4B] FIG. 4B is a diagram illustrating the grounds for the relationship between the radius of the core part and the length of the surface modification part of the nanoparticle.

[FIG. 5A] FIG. 5A is a diagram illustrating the grounds for the relationship between the radius of the core part and the length of the surface modification part of the nanoparticle.

[FIG. 5B] FIG. 5B is a diagram illustrating the grounds for the relationship between the radius of the core part and the length of the surface modification part of the nanoparticle.

[FIG. 6] FIG. 6 is a characteristic diagram illustrating a relationship between a ratio between the radius of the core part and the length of the surface modification part of the nanoparticle, and a proportion of the core part occupying a nanocomposite.

[FIG. 7] FIG. 7 is a characteristic diagram illustrating a relationship between a particle diameter and a transmissivity based on the ratio between the radius of the core part and the length of the surface modification part of each nanoparticle.

[FIG. 8] FIG. 8 is a conceptual diagram in a case where a transmission electron microscope is used to capture an image of the structure according to the present embodiment.

[FIG. 9] FIG. 9 is a characteristic diagram illustrating a relationship between a diameter of the core part and the number of surface modification molecules.

[FIG. 10] FIG. 10 is a flowchart illustrating an example of manufacturing steps of the structure illustrated in FIG. 1.

[FIG. 11] FIG. 11 is a conceptual diagram in a case where a transmission electron microscope is used to capture an image of the structure according to the present embodiment.

[FIG. 12] FIG. 12 is a schematic diagram illustrating an example of an outline configuration of a nanocomposite formed by using a typical method.

[FIG. 13] FIG. 13 is a schematic diagram illustrating another example of an outline configuration of a nanocomposite formed by using the typical method.

Modes for Carrying Out the Invention

In the following, description is given in detail of embodiments of the present technology with reference to the drawings. The following description is merely a specific example of the present disclosure, and the present disclosure should not be limited to the following aspects. Moreover, the present disclosure is not limited to arrangements, dimensions, dimensional ratios, and the like of each component illustrated in the drawings. It is to be noted that the description is given in the following order.

1. Embodiment (An example of a structure including a stack of multiple nanoparticles each including a core part having a predetermined radius and a surface modification part having a predetermined length)

    1-1. Configuration of Structure
    1-2. Method of Manufacturing Structure
    1-3. Workings and Effects

2. Use Examples of Structure

<1. Embodiment>

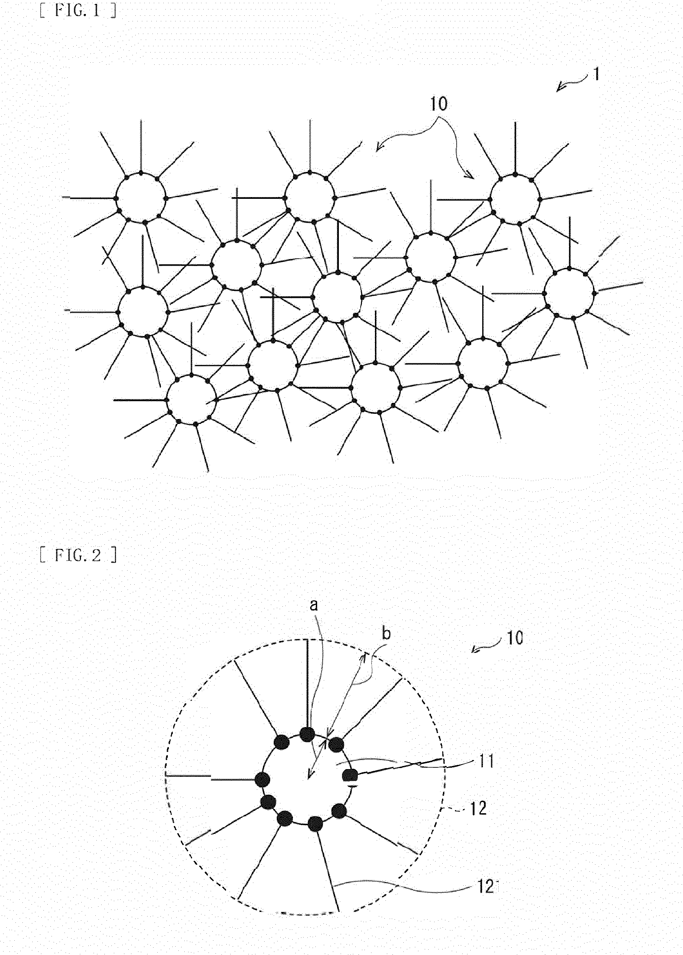

FIG. 1 schematically illustrates an example of an outline configuration of a structure (a structure 1) according to an embodiment of the present disclosure. FIG. 2 is a diagram illustrating an example of a structure of a nanoparticle 10 illustrated in FIG. 1. FIG. 2B is a diagram illustrating another example of the structure of the nanoparticle 10 illustrated in FIG. 1. The structure 1 is, for example, a nanocomposite that is able to be used as a glass substrate or an alternative material to a plastic material having optical transparency.

(1-1. Configuration of Structure)

The structure 1 of the present embodiment is a non-porous body including a stack of multiple nanoparticles 10 that each include a core part 11 and a surface modification part 12 covalently bonded to the core part 11 and satisfy a relationship of $0 < a/b \leq 2.73$ between a radius $a$ of the core part 11 and a length $b$ of the surface modification part 12. The structure 1 exhibits an adsorption-desorption isotherm of type II in IUPAC classification with respect to a predetermined base body. The adsorption-desorption isotherm may be measured in accordance with JIS standard Z8831-1: 2010.

As described above, the multiple nanoparticles 10 each include the core part 11 and the surface modification part 12.

The core part 11 is a complex oxide of metal atoms having resistance to oxidation. Specifically, it is an oxide of zirconium (Zr), titanium (Ti), tin (Sn), silicon (Si), aluminum (Al), or zinc (Zn) having optical transparency. It is also possible to use an oxide of tungsten (W) or yttrium (Y) having optical transparency though being colored. Among those metal oxides described above, it is desirable to use, as the core part 11, an Si oxide or an Al oxide having low refractive index and particularly high optical transparency.

The surface modification part 12 is used, when forming the structure 1, to fill a gap G between the multiple nanoparticles 10 adjacent to each other, as will be described in detail later. In addition, the surface modification part 12 is used to coat the surface of the core part 11 in order to prevent aggregation of the multiple core parts 11.

The surface modification part 12 includes, for example, multiple organic silane molecules 121. Examples of the organic silane molecule 121 include one that forms a covalent bond with the core part 11 and includes a reactive functional group. This allows the nanoparticles 10 to be covalently bonded to each other via the reactive functional groups of the respective organic silane molecules 121, and improves mechanical strength of the structure 1. Examples of the reactive functional group include a vinyl group, a methacrylic group, an acrylic group, a glycidyl group, a mercapto group, an amino group, a hydrosilyl group, a hydroxyl group, a carboxyl group, a cyano group, an amino group, a cyano group, and the like. Examples of the organic silane molecule 121 including the above-mentioned reactive functional group include an organic silane compound represented by the following general formula (1) or general formula (2).

[Chem. 1]

$$R^1{}_X Si(OR^2)_{4-X} \ldots \qquad (1)$$

$$R^1{}_X SiCl_{4-X} \ldots \qquad (2)$$

($R^1$ is any of a hydrogen atom, a vinyl group, an acryloxy group, a methacryloxy group, an aminopropyl group, a glycidoxypropyl group, and a mercaptopropyl group. $R^2$ is any of a methyl group, an ethyl group, a propyl group, and an isopropyl group. X is an integer of 3 or less.)

The surface modification part 12 includes, for example, an organic metal molecule 122 without a reactive functional group. This makes the structure 1 re-soluble in a predetermined solvent, allowing for recycle and manufacturing repair. Examples of the organic metal molecule 122 without a reactive functional group include an organic metal compound represented by the following general formula (3) or general formula (4).

[Chem. 2]

$$R^3{}_X M(OR^4)_{4-X} \ldots \qquad (3)$$

$$R^3{}_X MCl_{4-X} \ldots \qquad (4)$$

($R^3$ is any of a methyl group, an ethyl group, a propyl group, an isopropyl group, a butyl group, a pentyl group, a hexyl group, a heptyl group, an octyl group, a decyl group, a dodecyl group, a hexadecyl group, a vinyl group, and a phenyl group. $R^4$ is any of a methyl group, an ethyl group, a propyl group, and an isopropyl group. M is any of Si, Al, Ti, Sn, and Zn. X is an integer of 3 or less.)

It is to be noted that presence or absence of the organic silane molecule 121 and the organic metal molecule 122 coating the surface of the core part 11 and an aspect of the bonding between the core part 11 and the organic silane molecule 121 or the organic metal molecule 122 are able to be confirmed, for example, by component analysis or composition analysis. Examples of the component analysis and the composition analysis include Fourier transform infrared spectroscopy analysis (FT-IR), gas chromatography analysis (GC), X-ray photoelectron spectroscopy (XPS), nuclear magnetic resonance analysis (NMR), and energy-dispersive X-ray analysis (EDX). The presence or absence of the organic silane molecule 121 and the organic metal molecule 122 coating the surface of the core part 11 and the aspect of the bonding between the core part 11 and the organic silane molecule 121 or the organic metal molecule 122 are able to be analyzed using one or more of the above-mentioned analysis methods.

In the present embodiment, the length b of the surface modification part 12 with respect to the radius a of the core part 11 satisfies a relationship of $0 < a/b \leq 2.73$.

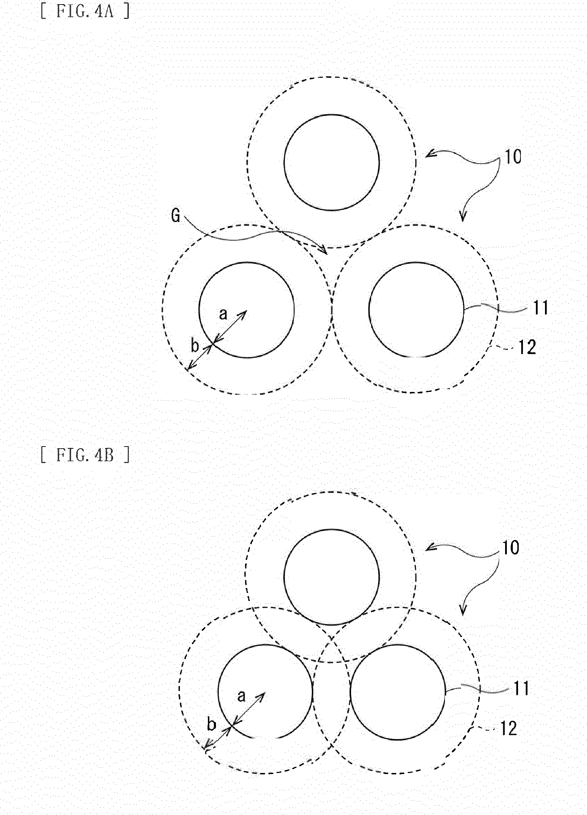

FIGs. 4A to 5B illustrate grounds for the relationship between the radius a of the core part 11 and the length b of the surface modification part 12 of the nanoparticle 10. In a case where the surface modification part 12 is long with respect to the core part 11, the multiple nanoparticles 10 dispersed in an organic solvent in manufacturing steps of the structure 1 to be described later, for example, are dispersed with the surfaces of the surface modification parts 12 contacting each other and having the gap G between the nanoparticles 10 close to each other, as illustrated in FIG. 4A. However, when packing proceeds by volatilization of the organic solvent after application on a substrate or the like, a closest-packed structure in which the surface modification parts 12 overlap each other is taken, and the gap G between the nanoparticles 10 close to each other is filled (a non-porous body), as illustrated in FIG. 4B. Thus, the length b of the surface modification part 12 with respect to the radius a of the core part 11 that prevents the gap G from occurring between the nanoparticles 10 close to each other satisfies a = 2.73b.

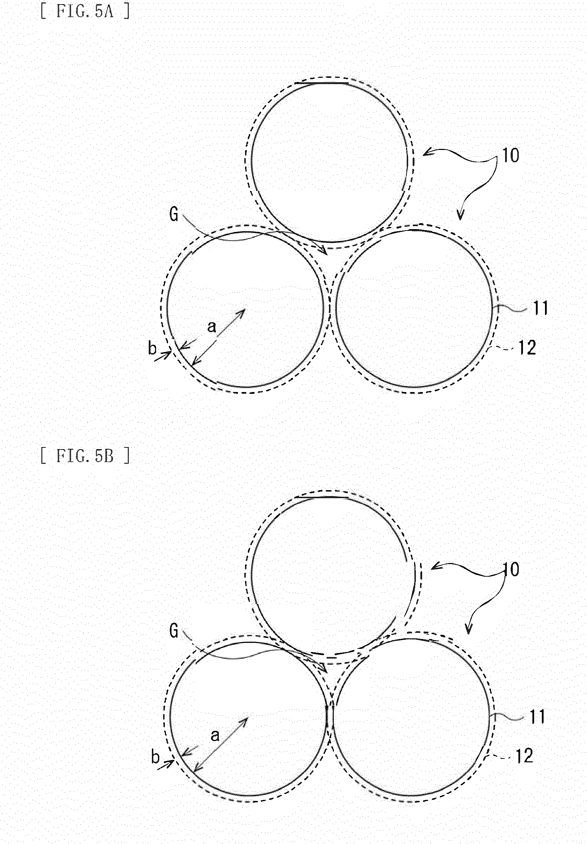

On the other hand, in a case where the surface modification part 12 is short with respect to the core part 11, the multiple nanoparticles 10 dispersed in the organic solvent are dispersed with the surfaces of the surface modification parts 12 contacting each other and having the gap G between the nanoparticles 10 close to each other as in FIG. 4A, as illustrated in FIG. 5A. However, the gap G remains between the nanoparticles 10 close to each other even if packing proceeds by volatilization of the organic solvent after application on the substrate or the like, as illustrated in FIG. 5B. The gap G causes a decrease in transparency of the structure 1. Based on this, according to calculation on the assumption that the multiple nanoparticles 10 included in the structure 1 take a closest-packed structure, making the length b of the surface modification part 12 with respect to the radius a of the core part 11 satisfy $a/b \leq 2.73$ makes it possible to obtain the structure 1 having a high optical transparency.

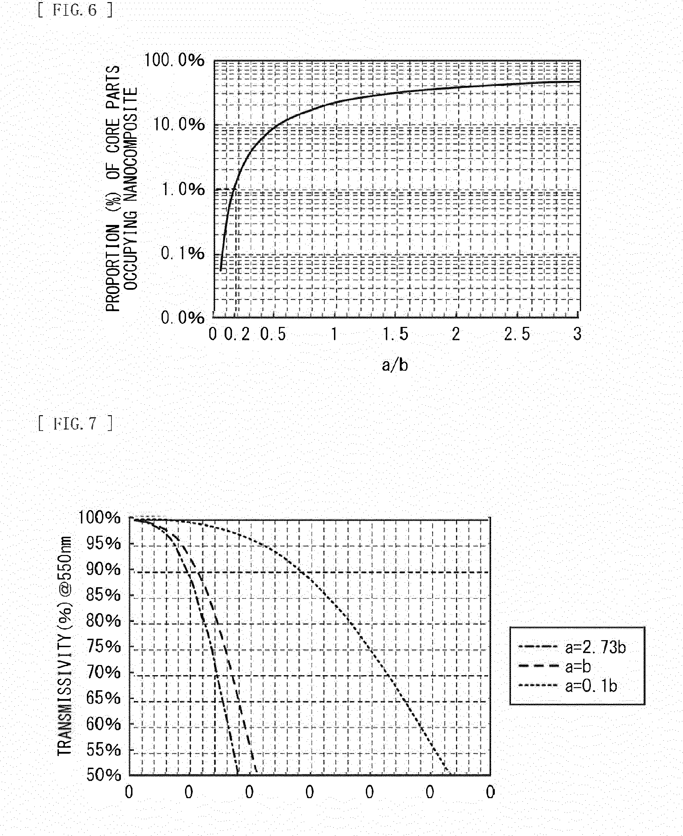

FIG. 6 illustrates a relationship between a ratio between the radius a of the core part 11 and the length b of the surface modification part 12 of the nanoparticle 10, and a proportion of the core parts 11 occupying the nanocomposite. Optical properties and temperature properties of the structure 1 are controllable by adjusting the ratio a/b. In that case, a lower limit value is not limited and is 0. Furthermore, in a case of adjusting strength and thermal properties of the structure 1, the lower limit of the ratio a/b is 0.2 with reference to FIG. 6, because it is effective to add 1% or more of nanoparticles in a typical nanocomposite. Therefore, the ratio between the radius a of the core part 11 and the length b of the surface modification part 12 is preferably $0 < a/b \leq 2.73$, more preferably $0.2 \leq a/b \leq 2.73$.

In a case of using the structure 1 as an optical member, the structure 1 preferably has predetermined light transmissivity. It is possible to use the structure 1 having a transmissivity of 70% or higher as an antireflection film for window glass of automobiles, for example. Alternatively, when the structure 1 has a transmittance of 90% or higher, for example, it is possible to use the structure 1 for window glass of buildings, glass substrates, and alternative materials to plastic materials, for example.

FIG. 7 illustrates a relationship between a particle diameter and a transmissivity based on the ratio between the radius a of the core part 11 and the length b of the surface modification part 12 of each nanoparticle 10, assuming that the structure 1 having a thickness of 1 mm is formed, the core part 11 has a refractive index of 2.2, the surface modification part 12 has a refractive index of 1.3, and the packing of the nanoparticles 10 is a closest-packed structure. In a case where the structure 1 is a non-porous body (a = 2.73b) without the gap G as illustrated in FIG. 4B, a transmissivity of 70% is obtained if the particle diameter (primary particle diameter) is equal to or smaller than 7 nm. Furthermore, a transmissivity of 90% is obtained if the particle diameter (primary particle diameter) is equal to or smaller than 5 nm. Note that the particle diameter here refers to a diameter (2a) of the core part 11.

Note that the primary particle diameter (the diameter of the core part 11) of each of the nanoparticles 10 is acquired as described below.

The structure 1 serving as a target to be measured is first processed and thinned by a FIB method, for example. As preliminary processing of observing a TEM image of a cross section, described later, in a case where the FIB method is used, a carbon film and a tungsten thin film are formed as protective films. The carbon film is formed by an evaporation method on the surface of the structure 1. The tungsten thin film is formed by an evaporation method or a sputtering method on the surface of the structure 1. Through such thinning as described above, the cross section of the structure 1 is formed.

A transmission electron microscope (Tecnai G2 manufactured by FEI) is used to perform cross-sectional observation on the cross section of the obtained thin piece sample in such a manner that it is possible to observe the multiple nanoparticles 10 at an acceleration voltage of 200 kV and in a field of view of 50 nm × 50 nm, to thereby capture a TEM photograph. Note that an imaging position is selected at random on the thin piece sample.

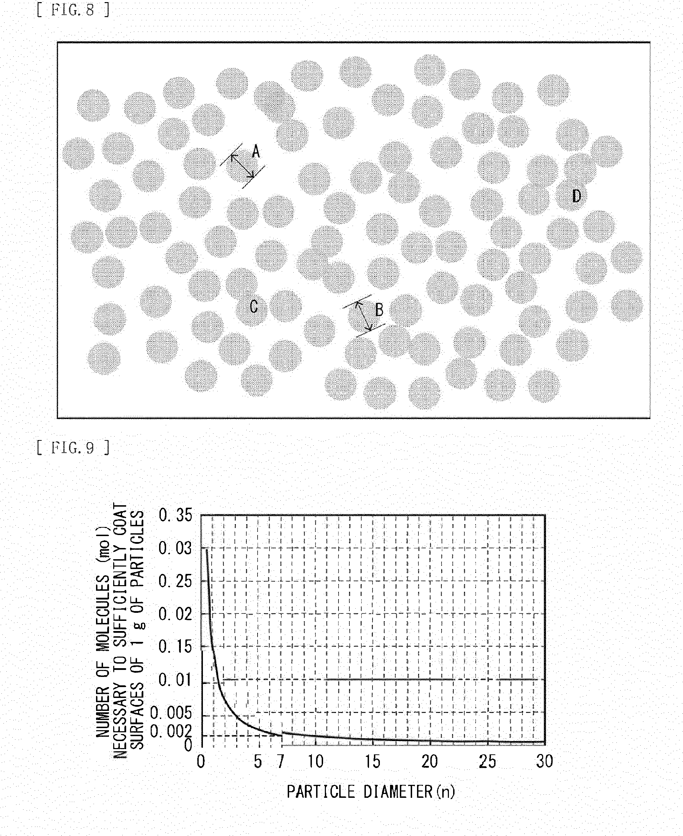

Next, 50 nanoparticles 10, for which it is possible to clearly confirm their diameters in a direction of an observation plane, are selected from the captured TEM photograph. In a case where the number of nanoparticles 10 that are present in one field of view, for which it is possible to clearly confirm their diameters, is below 50, 50 nanoparticles 10, for which it is possible to clearly confirm their diameters in the direction of the observation plane, are selected from multiple field of views. FIG. 8 is a conceptual diagram of a TEM photograph in a case where a transmission electron microscope is used to capture an image of the structure 1. In FIG. 8, for example, a nanoparticle A and a nanoparticle B, for which it is possible to clearly confirm their diameters, are selected. On the other hand, a nanoparticle C and a nanoparticle D, for example, are overlapping with other nanoparticles 10 in a depth direction of observation, for which it is not possible to confirm their shapes, and are not appropriate as targets to be measured. A maximum diameter of each of the selected 50 nanoparticles 10 is measured.

Here, the maximum diameter refers to a maximum distance among distances each between two parallel lines both drawn at all angles at which the lines are in contact with a contour of the nanoparticle 10 (i.e., a maximum Feret's diameter). To measure the maximum diameter (the maximum Feret's diameter), a diameter of a particle portion, excluding an alkoxy group or a reactive functional group modifying the surface of each of the nanoparticles 10, is measured. By acquiring a median of the 50 maximum diameters (the maximum Feret's diameters) acquired in this manner, the primary particle diameter (a mean particle diameter) of each of the nanoparticles 10 is obtained.

FIG. 9 illustrates a relationship between the diameter (2a) of the core part 11 and the number of surface modification molecules (the organic silane molecule 121 or organic metal molecule 122). As described above, the surface modification part 12 is used to fill the gap G between the nanoparticles 10 and to prevent aggregation of the nanoparticles 10. Therefore, it is desired that the surface of the core part 11 be sufficiently coated with the surface modification part 12. FIG. 9 illustrates the number M (mol) of the surface modification molecules necessary per 1 g of particles with a particle diameter d (nm), when density of the particles is $4.3 \text{ g/cm}^3$ and an occupancy area to be coated with one molecule is 0.16 $\text{nm}^2$. Causing molecules equal to or more than the number M to react allows the particles to be sufficiently surface-modified. Note that, in a case where sufficient surface modification is not performed, the particles aggregate with each other and gaps are formed between the particles. This is expressed by a mathematical expression: $M > 0.015/d$.

(1-2. Method of Manufacturing Structure)

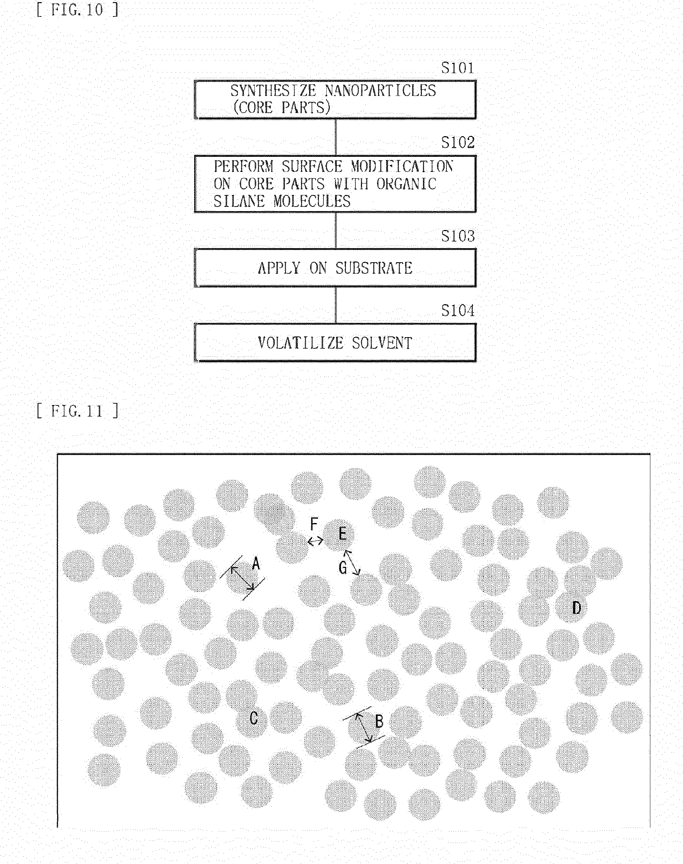

FIG. 10 illustrates a flow of an example of manufacturing steps of the structure 1.

First, the core part 11 of the nanoparticle 10 is synthesized using a liquid phase method (step S101). In general, a method of manufacturing nanoparticles is roughly classified into two types: a gas phase method and a liquid phase method. A fine core part 11 having a diameter of 10 nm or smaller is able to be isolated without causing aggregation by using the liquid phase method. As a precursor for the liquid phase method, it is possible to select a metal alkoxide molecule represented by the following general formula (5), which makes it possible to form a three-dimensional metal oxide skeleton (M-O-M) through a hydrolysis reaction and a condensation polymerization reaction. The metal alkoxide molecules may be the molecules in which some of alkoxy groups are substituted by non-hydrolysis functional groups, which does not interfere with formation of a metal oxide skeleton. After the above-described precursor is dissolved in water or an organic solvent, acidity or basicity of pH of the solution is adjusted. This causes a polymerization reaction to start to form multiple metal oxide nanoparticles (core parts 11).

[Chem. 3]

$$R^5{}_Z M(OR^6)_{4-Z} \ldots \qquad (5)$$

($R^5$ is any of a methyl group, an ethyl group, a propyl group, an isopropyl group, a butyl group, a pentyl group, a hexyl group, a heptyl group, an octyl group, a decyl group, a dodecyl group, a hexadecyl group, a vinyl group, a phenyl group, an acryloxy group, a methacryloxy group, an aminopropyl group, a glycidoxypropyl group, and a mercaptopropyl group. $R^6$ is any of a hydrogen atom, a methyl group, an ethyl group, a propyl group, and an isopropyl group. M is any of Si, Al, Ti, Sn, and Zn. Z is an integer of 0 or 2 or less.)

Note that the surface of the formed core part 11 may be coated with an amphipathic molecule such as a surfactant molecule, an amino acid molecule, or a polymer molecule. This makes it possible to prevent aggregation of the multiple core parts 11 inside the dispersion liquid in the next surface modification step of the core part 11.

In addition, as long as a final diameter of each of the nanoparticles 10 is equal to or smaller than 7 nm, the manufacturing method is not limited to that described above. Some reference literatures are exemplified below. For example, Literature 1 (A. A. Burns et al. Nano Lett. 2009, 9, 1, 442-448) reports formation of a silica nanoparticle with a diameter of 3.3 nm in an aqueous solution in the presence of polyethylene glycol. Literature 2 (S. Sakamoto et al. Langmuir 2018, 34, 1711-1717) reports formation of a silica nanoparticle and a titanium oxide nanoparticle having a diameter of 3 nm by using an inverted micellar liquid crystal phase as a template, in which the nanoparticle is surface-coated with surfactant molecules, thereby enabling isolation of the nanoparticles without causing aggregation thereof. Furthermore, the manufacturing methods described above may be variously modified. For example, drying methods described in Literatures 1 and 2 may be replaced with a drying step using a vacuum concentration machine such as a rotary evaporator. This makes it possible to improve mass productivity.

Next, the multiple core parts 11 are dispersed in a solvent to perform surface modification (step S102). The dispersing liquid in which the multiple core parts 11 are dispersed is added with the organic silane compound represented by the above general formula (1) or general formula (2). After the addition of the organic silane compound, heating is performed as needed. This causes the core part 11 and the organic silane compound to react with each other to form a covalent bond, thus forming the surface modification part 12 around the core part 11.

Note that, in a case where the surface of the core part 11 is coated with the amphipathic molecule in the previous step, the amphipathic molecule is removed from the surface of the core part 11 by heating after the addition of the organic silane compound, resulting in a state in which the organic silane molecule 121 is covalently bonded to the surface of the core part 11.

In addition, the multiple nanoparticles 10 do not necessarily have to be coupled to each other, and the organic metal compound without a reactive functional group, represented by the above general formula (3) or general formula (4), may be added to the dispersion liquid to form the surface modification part 12 including the organic metal compound.

Next, the dispersion liquid is applied on a substrate (step S103) and thereafter a solvent component is volatilized to obtain the structure 1 (step S104). Examples of methods for volatilizing the solvent include vaporization at an elevated temperature under normal pressure or by vacuum drying. The structure 1 in which the multiple nanoparticles 10 are integrated is thus obtained.

Note that, in a case of forming the surface modification part 12 using the organic silane compound including a reactive functional group, coupling the reactive functional groups of the organic silane molecules 121 coating the respective core parts 11 to each other makes it possible to obtain a strong structure 1. For example, heating or light irradiation is performed on the structure 1 (integrated film) after the volatilization of the solvent component. Thus, a cross-linking reaction proceeds between the reactive functional group of the organic silane molecule 121 covalently bonded to the respective core parts 11. In a case where the cross-linking reaction is an organic reaction such as a radical polymerization, cationic polymerization, or anionic polymerization, an appropriate reaction initiator may be added into the integrated film.

It is possible to confirm an aspect of the structure 1, for example, by using a method described below.

First, the structure 1 is classified into an insoluble sample and a soluble sample depending on whether or not it is dissolved in the following solvent. Examples of the solvent include alcohols (selected from methanol, ethanol, 1-propanol, 2-propanol, 1-decanol, benzyl alcohol, and ethylene glycol), ketones (selected from acetone, methyl ethyl ketone, and methyl isobutyl ketone), ethers (selected from diethyl ether, diphenyl ether, and tetrahydrofuran), and hydrocarbons (selected from hexane, octane, decane, dodecane, and cyclohexane).

In a case where the structure 1 is not dissolved in the above-mentioned solvent (in a case where the surface modification part 12 includes the organic silane molecule 121, and the multiple nanoparticles 10 are coupled via the reactive functional group of the organic silane molecule 121 on the surface of the core part 11), the radius a of the nanoparticle 10 (the core part 11) and the length b of the surface modification part may both be calculated from a TEM image. In a case where the structure 1 is dissolved (dispersed) in the above-mentioned solvent, the radius a of the nanoparticle 10 (the core part 11) may be calculated from a TEM image, and the length b of the surface modification part may be calculated from an NMR analysis result.

FIG. 11 is a conceptual diagram of a TEM photograph. The radius a of the nanoparticle 10 (the core part 11) is obtained by using the above-described measurement method of the primary particle diameter of the nanoparticle 10 (the diameter of the core part 11). As the length b of the surface modification part, a portion that is on a line segment coupling the center of a nanoparticle and the center of a nanoparticle closest to the nanoparticle and is not included in the two particles is defined as the length b of the surface modification part. For example, as illustrated in FIG. 11, a distance F to the nanoparticle closest to a nanoparticle E is counted, and the distance to the other nanoparticles (e.g., a distance G) is not subject to counting. Any 50 nanoparticles are selected, and the 50 points are measured to calculate the average value. Note that double counting is not performed even if two nanoparticles match in proximity distance. The respective average values of the radius a of the nanoparticle 10 (the core part 11) and the length b of the surface modification part are calculated, and a/b is calculated by division between the average values.

The following measurement method is used in calculation from an NMR analysis result. Used as a nuclear magnetic resonance device (NMR) is JNM-ECZ 500 manufactured by JEOL Ltd. First, 100 mg of a sample is dissolved in 600 $\mu$L of deuterium-containing chloroform or tetrahydrofuran, followed by addition of 10 mg of acetylacetone chromium and placement in a dedicated 5-mm glass tube. This is measured for nuclides 1H, 13C and 29Si with resonance frequencies of 495 MHz, 125.76 MHz, and 99.36 MHz and relaxation times of 4 seconds, 2 seconds, and 10 seconds. Tetramethylsilane is set to 0 ppm as an internal standard. In a molecular structure of the surface modification part to be identified, the number of atoms included in the longest main chain is defined as X, and the length b of the surface modification part is calculated using the following mathematical expression (1) with reference to Tanford's equation. Note that the unit is nanometer.

[Math. 1]

$$b = 0.15 + 0.1265 * X \ldots (1)$$

(1-3. Workings and Effects)

The structure 1 of the present embodiment is formed using the multiple nanoparticles 10 that each include the core part 11 and the surface modification part 12 covalently bonded to the core part 11 and satisfy the relationship of $0 < a/b \leq 2.73$ between the radius a of the core part 11 and the length b of the surface modification part 12. This will be described below.

Glass has features such as high transparency, durability, mechanical strength, hardness, and stability, and is widely used not only for window glass, mirrors, lenses, and eating utensils, but also in industry fields such as optical parts and substrates.

Glass is a complex oxide of various metal atoms, where, generally, the metal atoms (M) three-dimensionally form a covalent bond network together with oxygen atoms (O) via M-O-M bonding. Solidifying a typical glass material into a desired shape generally involves an issue of great environmental burdens in manufacture, such as melting a raw material at a high temperature equal to or higher than 1000°C. Furthermore, another issue on typical glass materials is that it is not possible to form a complex with an organic matter or metal. Furthermore, another issue on typical glass materials is that there is a low degree of freedom in shape.

As a method of solving these issues, for example, such a glass manufacturing method at a low temperature has been developed that metal alkoxide and sodium salt are used as precursors and subjected to hydrolysis and condensation polymerization. Even in a case where the method described above is used, however, opacification, occurrence of a crack, or the like due to shrinkage during condensation polymerization can cause the features as glass to be lost. Therefore, plastic materials that have lower durability and strength but are easily formable at a low temperature, compared with glass materials, are used as alternative materials.

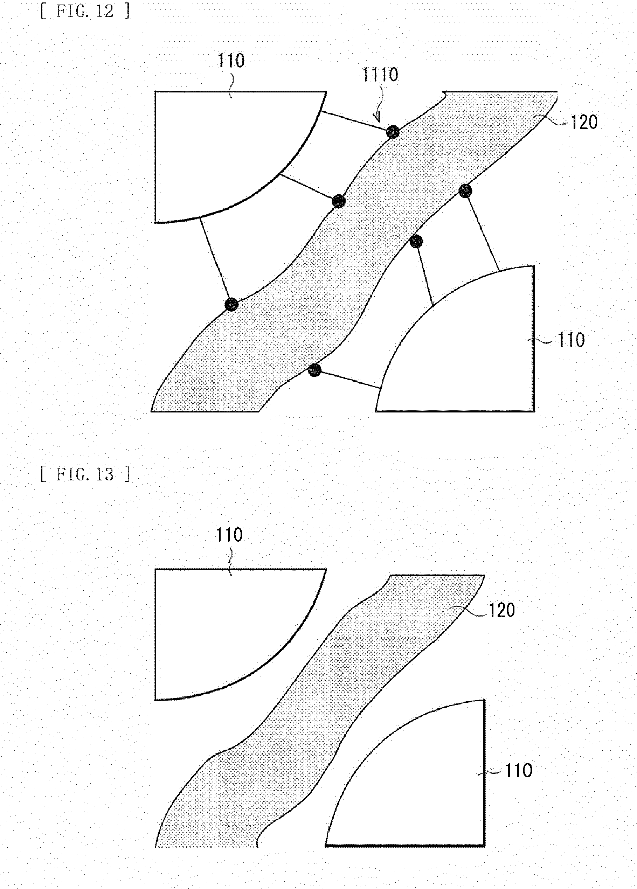

By the way, a nanocomposite including inorganic compound particles and an organic material has been under development in recent years as an alternative, cost-effective material to the glass materials. A nanocomposite is an organic-and-inorganic complex compound material in which inorganic particles are dispersed in a polymer resin in which an organic compound is polymerized. A nanocomposite using a curable resin as a polymer resin has, for example, such a structure that multiple inorganic particles (nanoparticles 110) and a resin 120 are coupled to each other via reactive functional groups 1110, and the multiple nanoparticles 110 are not coupled to each other, as illustrated in FIG. 12, for example. A nanocomposite using a thermoplastic resin as a polymer resin has, for example, such a structure that multiple nanoparticles 110 and a resin 120 are not coupled to each other, and the multiple nanoparticles 110 are not coupled to each other, as illustrated in FIG. 13, for example. Such a typical nanocomposite has performance close to that of glass, and is manufacturable at a low temperature.

In such a nanocomposite, however, it is difficult to uniformly disperse nanoparticles individually in the resin, which causes an issue of loss of transparency due to phase separation or formation of voids (gaps).

In view of this, in the present embodiment, the multiple nanoparticles 10 that each include the core part 11 and the surface modification part 12 covalently bonded to the core part 11 and satisfy the relationship of $0 < a/b \leq 2.73$ between the radius a of the core part 11 and the length b of the surface modification part 12 are used for formation. This makes it possible to obtain a non-porous body without the gap G between the multiple nanoparticles 10.

In the structure 1 according to the present embodiment, as described above, it is possible to provide a nanocomposite having high light transmissivity and free from phase separation or voids (gaps), which is able to be used as alternative material to glass material, for example.

In addition, in the structure 1 of the present embodiment, configuring the surface modification part 12 using the organic metal molecule 122 without a reactive functional group makes the structure 1 re-soluble in a predetermined solvent. This allows for recycle and manufacturing repair, even in a case where a foreign matter is mixed due to a device malfunction or the like during manufacture, making it possible to improve production yield.

<2. Use Examples of Structure>

It is possible to use the structure 1 according to the embodiment described above for not only window glass, mirrors, lenses, and eating utensils, but also in various cases as described below, for example.

For example, it is possible to use the structure 1 as glass used for building materials, automobiles, displays, decorative materials, and home electric appliances. Specifically, it is possible to use the structure as window glass, design glass, interior glass, and glass coating, in the building materials. In the automobiles, it is possible to use the structure as front glass, display-purpose cover glass, and privacy glass. In the displays, it is possible to use the structure as glass substrates for flat panel displays and cover glass for touch panels. In the decorative materials, it is possible to use the structure as tableware, flower vases, and tiles. In the home electric appliances, it is possible to use the structure as constituent materials of lighting appliances and small home electric appliances.

For example, it is possible to use the structure 1 as an alternative material to plastic resins used for housings of electronic apparatuses, for space, aviation, and automobiles, as construction materials, for household appliances, as decorative materials, and as containers and coatings of food and beverage. Specifically, it is possible to use the structure as an exterior part such as a bumper or a radiator grille, in the space, aviation, and automobiles. It is possible to use the structure as interior and exterior materials, heat insulating materials, piping materials, civil engineering materials, in the construction materials. It is possible to use the structure as those for baths, toilets, and kitchens, in the household appliances. It is possible to use the structure as tableware, flower vases, lighting appliances, and small home electric appliances, in the decorative materials.

For example, by forming or spinning, it is possible to use the structure 1 as an alternative material to fibers used in clothing, fabrics, sporting goods, architectural materials, residential materials, industrial materials, reinforcing cloth, space, aviation, or automobile fiber reinforced plastics, and communications cables, etc.

Note that the present technology may relate to Goal 13 "CLIMATE ACTION" and Goal 14 "LIFE BELOW WATER" relating to Sustainable Development Goals (SDGs) adopted in the UN summit held in 2015. Plastic materials produced from petroleum as raw materials for those applications described above have been used so far. However, such global issues have been known that discarded plastic materials flow into the sea to become floating plastic garbage that is harmful to living bodies to cause sea contamination, and, when discarded plastic materials are burnt, greenhouse effect gases are produced to cause global warming. By using the configuration of the present technology, it is possible to use a plastic alternative material produced from a rock-derived inorganic oxide as a main raw material. With such a plastic alternative material, in which a plastic content is smaller than that of existing nanocomposite material or plastic material and the main raw material has biocompatibility and hydrolyzability, there is a lower risk of becoming floating garbage that is harmful to living bodies even when the plastic alternative material flows into the sea. Furthermore, such a plastic alternative material, in which a main component produced when the main raw material is burnt is water vapor and for which it is expected that greenhouse effect gases to be discharged are small in amount, compared with the plastic materials, may contribute to prevent sea contamination and to suppress global warming.

Although the present disclosure has been described with reference to the embodiment and the use examples, the present disclosure is not limited to the embodiment and the use examples described above, but may be modified in a wide variety of ways.

Note that the effects described in the specification are mere examples. The effects are not limited to the effects described in the specification. There may be any other effects than those described herein.

It is to be noted that the present technology may also have the following configurations. The multiple nanoparticles that each include the core part and the surface modification part covalently bonded to the core part and satisfy the relationship of $0 < a/b \leq 2.73$ between the radius a of the core part and the length b of the surface modification part are used for formation. This makes it possible to obtain a non-porous body without the gap G between the multiple nanoparticles 10. Thus, it is possible to provide a structure having high light transmissivity.

[1] A structure including a stack of multiple nanoparticles that each include a core part and a surface modification part covalently bonded to the core part and satisfy a relationship of $0 < a/b \leq 2.73$ between a radius a of the core part and a length b of the surface modification part.

[2] The structure according to [1], in which the structure exhibits an adsorption-desorption isotherm of type II in IUPAC classification.

[3] The structure according to [1] or [2], in which a primary particle diameter of each of the multiple nanoparticles is equal to or smaller than 7 nm.

[4] The structure according to [1] or [2], in which a primary particle diameter of each of the multiple nanoparticles is equal to or smaller than 5 nm.

[5] The structure according to any one of [1] to [4], in which the core part of each of the multiple nanoparticles includes a metal oxide.

[6] The structure according to any one of [1] to [5], in which the core part of each of the multiple nanoparticles includes an oxide of zirconium, titanium, tin, silicon, aluminum, or zinc.

[7] The structure according to any one of [1] to [5], in which the core part of each of the multiple nanoparticles includes an oxide of silicon or aluminum.

[8] The structure according to any one of [1] to [7], in which the surface modification part includes a reactive functional group.

[9] The structure according to [8], in which the surface modification part including the reactive functional group includes an organic silane compound represented by the following general formula (1) or general formula (2).
[Chem. 1]

$$R^1_X Si(OR^2)_{4-X} \ldots \qquad (1)$$

$$R^1_X SiCl_{4-X} \ldots \qquad (2)$$

($R^1$ is any of a hydrogen atom, a vinyl group, an acryloxy group, a methacryloxy group, an aminopropyl group, a glycidoxypropyl group, and a mercaptopropyl group. $R^2$ is any of a methyl group, an ethyl group, a propyl group, and an isopropyl group. X is an integer of 3 or less.)

[10] The structure according to any one of [1] to [7], in which the surface modification part does not include a reactive functional group.

[11] The structure according to [10], in which the surface modification part not including the reactive functional group includes an organic metal compound without a reactive functional group, represented by the following general formula (3) or general formula (4).
[Chem. 2]

$$R^3{}_X M(OR^4)_{4-X} \ldots \qquad (3)$$

$$R^3{}_X MCl_{4-X} \ldots \qquad (4)$$

($R^3$ is any of a methyl group, an ethyl group, a propyl group, an isopropyl group, a butyl group, a pentyl group, a hexyl group, a heptyl group, an octyl group, a decyl group, a dodecyl group, a hexadecyl group, a vinyl group, and a phenyl group. $R^4$ is any of a methyl group, an ethyl group, a propyl group, and an isopropyl group. M is any of Si, Al, Ti, Sn, and Zn. X is an integer of 3 or less.)

This application claims the benefit of Japanese Priority Patent Application JP2022-046569 filed with the Japan Patent Office on March 23, 2022, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

## Claims

1. A structure comprising a stack of multiple nanoparticles that each include a core part and a surface modification part covalently bonded to the core part and satisfy a relationship of $0 < a/b \leq 2.73$ between a radius a of the core part and a length b of the surface modification part.

2. The structure according to claim 1, wherein the structure exhibits an adsorption-desorption isotherm of type II in IUPAC classification.

3. The structure according to claim 1, wherein a primary particle diameter of each of the multiple nanoparticles is equal to or smaller than 7 nm.

4. The structure according to claim 1, wherein a primary particle diameter of each of the multiple nanoparticles is equal to or smaller than 5 nm.

5. The structure according to claim 1, wherein the core part of each of the multiple nanoparticles comprises a metal oxide.

6. The structure according to claim 1, wherein the core part of each of the multiple nanoparticles comprises an oxide of zirconium, titanium, tin, silicon, aluminum, or zinc.

7. The structure according to claim 1, wherein the core part of each of the multiple nanoparticles comprises an oxide of silicon or aluminum.

8. The structure according to claim 1, wherein the surface modification part includes a reactive functional group.

9. The structure according to claim 8, wherein the surface modification part including the reactive functional group includes an organic silane compound represented by the following general formula (1) or general formula (2).
   [Chem. 1]

$$R^1{}_X Si(OR^2)_{4-X} \ldots \qquad (1)$$

$$R^1{}_X SiCl_{4-X} \ldots \qquad (2)$$

($R^1$ is any of a hydrogen atom, a vinyl group, an acryloxy group, a methacryloxy group, an aminopropyl group, a glycidoxypropyl group, and a mercaptopropyl group. $R^2$ is any of a methyl group, an ethyl group, a propyl group, and an isopropyl group. X is an integer of 3 or less.)

10. The structure according to claim 1, wherein the surface modification part does not include a reactive functional group.

11. The structure according to claim 10, wherein the surface modification part not including the reactive functional group comprises an organic metal compound without a reactive functional group, represented by the following general formula (3) or general formula (4).
[Chem. 2]

$$R^3{}_X M(OR^4)_{4-X} \,...\qquad(3)$$

$$R^3{}_X MCl_{4-X} \,...\qquad(4)$$

($R^3$ is any of a methyl group, an ethyl group, a propyl group, an isopropyl group, a butyl group, a pentyl group, a hexyl group, a heptyl group, an octyl group, a decyl group, a dodecyl group, a hexadecyl group, a vinyl group, and a phenyl group. $R^4$ is any of a methyl group, an ethyl group, a propyl group, and an isopropyl group. M is any of Si, Al, Ti, Sn, and Zn. X is an integer of 3 or less.)

[ FIG. 1 ]

[ FIG. 2 ]

EP 4 497 725 A1

[ FIG. 3 ]

13

[ FIG. 4A ]

[ FIG. 4B ]

[ FIG. 5A ]

[ FIG. 5B ]

[ FIG. 6 ]

[ FIG. 7 ]

[ FIG. 8 ]

[ FIG. 9 ]

[ FIG. 10 ]

S101

```
SYNTHESIZE NANOPARTICLES
(CORE PARTS)
```

S102

```
PERFORM SURFACE MODIFICATION
ON CORE PARTS WITH ORGANIC
SILANE MOLECULES
```

S103

```
APPLY ON SUBSTRATE
```

S104

```
VOLATILIZE SOLVENT
```

[ FIG. 11 ]

[ FIG. 12 ]

110

1110

120

110

[ FIG. 13 ]

110

120

110

## INTERNATIONAL SEARCH REPORT

| | International application No. |
|---|---|
| | **PCT/JP2023/009554** |

**A. CLASSIFICATION OF SUBJECT MATTER**

*B82B 1/00*(2006.01)i; *B82Y 20/00*(2011.01)i; *B82Y 30/00*(2011.01)i
FI:  B82B1/00; B82Y30/00; B82Y20/00

According to International Patent Classification (IPC) or to both national classification and IPC

**B. FIELDS SEARCHED**

Minimum documentation searched (classification system followed by classification symbols)

B82B1/00; B82Y20/00; B82Y30/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2004-303870 A (KABUSHIKI KAISHA TOSHIBA) 28 October 2004 (2004-10-28) abstract, paragraphs [0013]-[0084], fig. 1-7 | 1-11 |
| A | JP 2004-520456 A (NANOPHASE TECHNOLOGIES CORP.) 08 July 2004 (2004-07-08) entire text, all drawings | 1-11 |
| A | US 2014/0343233 A1 (UNIVERSITY OF SOUTH CAROLINA) 20 November 2014 (2014-11-20) entire text, all drawings | 1-11 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 April 2023** | **09 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/009554**

| Patent document cited in search report | | | Publication date (day/month/year) | Patent family member(s) | | | Publication date (day/month/year) |
|---|---|---|---|---|---|---|---|
| JP | 2004-303870 | A | 28 October 2004 | (Family: none) | | | |
| JP | 2004-520456 | A | 08 July 2004 | US entire text, all drawings | 6896958 | B1 | |
| | | | | WO | 2002/045129 | A2 | |
| | | | | EP | 1339542 | A2 | |
| | | | | AU | 3935902 | A | |
| | | | | CA | 2429747 | A1 | |
| | | | | AU | 2002239359 | B2 | |
| US | 2014/0343233 | A1 | 20 November 2014 | WO | 2013/078309 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013094679 A

- JP 2022046569 A

**Non-patent literature cited in the description**

- **A. A. BURNS et al.** *Nano Lett*, 2009, vol. 9 (1), 442-448

- **S. SAKAMOTO et al.** *Langmuir*, 2018, vol. 34, 1711-1717